# EUROPEAN PATENT SPECIFICATION

(11) **EP 1 777 772 B1**
(45) Date of publication and mention of the grant of the patent: **07.11.2007**
(21) Application number: 05425734.0
(22) Date of filing: 19.10.2005
(51) Int. Cl.: H01M 10/46, H01M 10/48, B60R 16/02, H02J 7/00

(54) **Apparatus for the storage of electrical energy, used for the supply of priority electrical loads, particularly for motor vehicles**
Vorrichtung zum Speichern von elektrischer Energie für die Versorgung von elektrischen Lasten mit hoher Priorität, insbesondere für Motorfahrzeuge
Dispositif pour le stockage de l'énergie électrique, pour l'alimentation des charges électriques de haute priorité, de préférence pour des véhicules motorisés

(43) Date of publication of application: 25.04.2007
(73) Proprietor: C.R.F. Società Consortile per Azioni, 10043 Orbassano (Torino) (IT)
(72) Inventor: Casellato, Giancarlo, 10043 Orbassano Torino (IT); Cavalla, Giancarlo, 10043 Orbassano Torino (IT)
(74) Representative: Quinterno, Giuseppe

(56) References cited:
- US-A- 5 717 310
- US-A- 5 739 668
- US-A- 5 783 872

## Description

The present invention relates to an apparatus for the storage and supply of electrical energy for the supply of predetermined priority electrical loads in a system such as an electrical system on board a motor vehicle in which there is an apparatus for generating electrical energy with which (at least) one main storage battery is associated.

In conventional motor vehicles that are currently in production, the electrical energy required for the on-board electrical/electronic devices is produced by a generator (typically an alternator) driven by the motor vehicle's engine, and is then stored and supplied by (at least) one storage battery and is absorbed by the various on-board user devices or loads in operation.

Naturally, the amount of energy that can be generated on board a motor vehicle is limited and depends on the rate of rotation of the motor-vehicle's engine.

In operation, various conditions may arise in which the amount of energy generated on board is less than the amount of energy that is required by the user devices; in such situations, the "lacking" amount of energy is obtained from the storage battery, the charge of which is correspondingly reduced. If the storage battery is completely discharged, all of the on-board user systems cease to operate.

Such a condition is not generally dangerous in a conventional motor vehicle without "drive-by-wire" systems, in particular without "by-wire" steering and braking systems.

In the above-mentioned conventional motor vehicles, the capacity of the electrical-energy storage system (the battery) is selected on the basis of conventional electrical-balance analysis methods which relate to predefined standard operating cycles and which aim to reduce greatly the probability of situations occurring in practice, in which the motor-vehicle is not available due to a deficit of electrical energy.

In motor vehicles with by-wire steering and/or by-wire braking systems, a lack of electrical energy is liable to lead to failure of the control and electrically-operated systems, which has a very great impact on safety. In such vehicles, the increase in the demand for electrical energy due to the introduction of by-wire systems renders the on-board electrical balance even more critical because the capacity of the on-board generator cannot be increased indiscriminately at will. In vehicles with by-wire steering and braking, a selection of the capacity of the energy system based on conventional methods does not ensure that there will not be situations in which the electrical balance becomes negative for sufficient time to put the system in crisis.

US 5 739 668 A discloses charging control systems and circuits for recharging batteries of electric automobiles.

US 5 717 310 discloses a power supply control device for an electric vehicle.

US 5 783 872 discloses a battery temperature compensation circuit for a DC/DC converter used to charge an auxiliary battery for an electric vehicle.

An object of the present invention is to provide an apparatus for the storage and supply of electrical energy for the supply of predetermined priority electrical loads in a system, such as the electrical system of a motor vehicle, in which there is another apparatus for generating electrical energy with which at least one main storage battery is associated.

This and other objects are achieved according to the invention by an apparatus comprising:
a rigid, leaktight casing which has a single multipole electrical connector and which houses:
   * an auxiliary storage battery to be connected operatively to the priority loads by means of the connector,
   * a controlled unidirectional DC/DC converter to be connected to the auxiliary battery and, via the connector, to the apparatus for generating electrical energy to permit a flow of recharging energy towards the auxiliary battery,
   * electrical switch means suitable for controlling the connections between the DC/DC converter and the auxiliary battery and, via the connector, the generating apparatus, and
   * an electronic control unit associated with the DC/DC converter and arranged for:
      - controlling the electrical switch means in a manner such as to enable the DC/DC converter to be connected to the generating apparatus and to the auxiliary battery in predetermined operative conditions,
      - then estimating the charge state of the auxiliary battery in accordance with predetermined procedures, and
      - driving the DC/DC converter in a manner such as to regulate the supply of electrical energy coming from the generating apparatus to the auxiliary battery in a manner such that the estimated charge state of the auxiliary battery tends towards a predetermined reference value.

Further characteristics and advantages of the invention will become clear from the following detailed description which is given purely by way of non-limiting example with reference to the appended drawings, in which:
Figure 1 is a partially exploded, perspective view of an apparatus according to the present invention,
Figure 2 is an electrical diagram of the apparatus of Figure 1,
Figure 3 is a plan view taken on the arrow III of Figure 1, and
Figure 4 is a partial view sectioned on the line IV-IV of Figure 3.

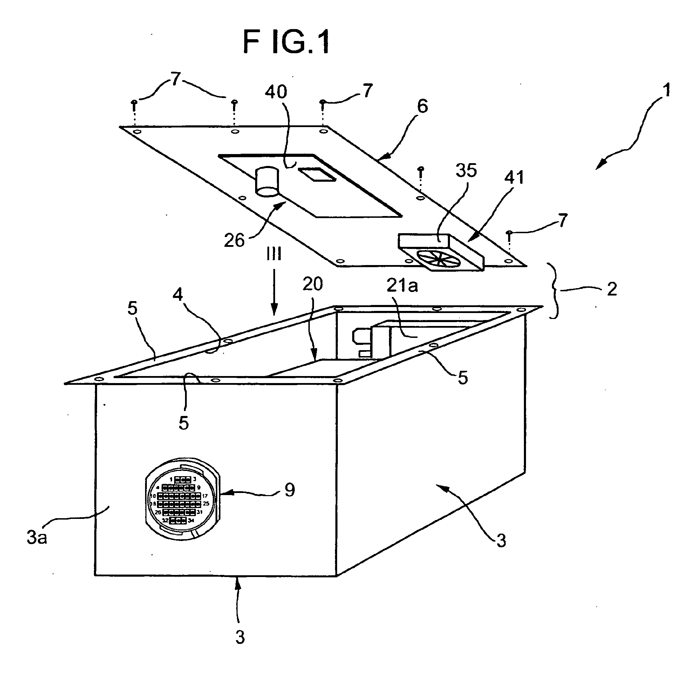

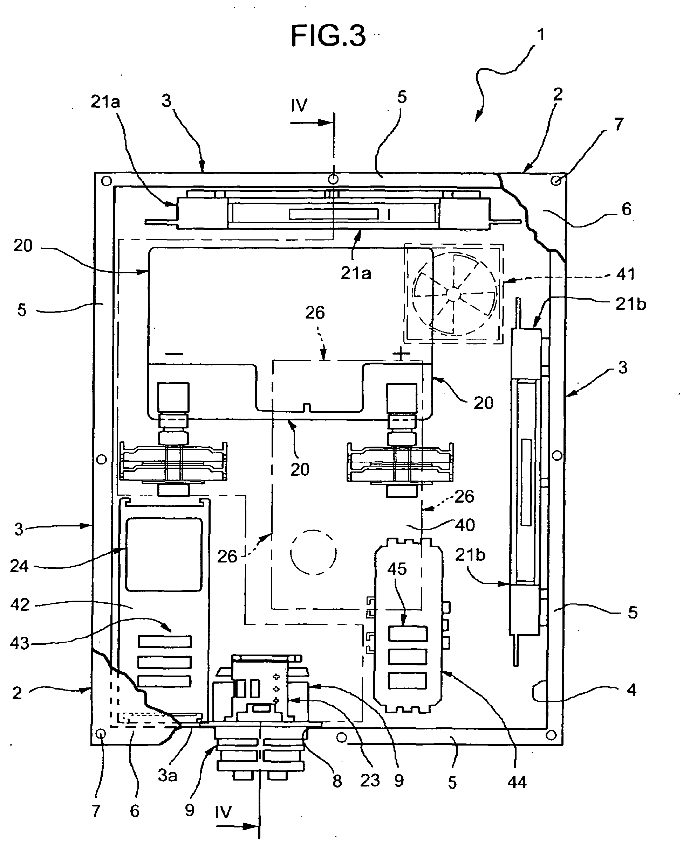

With reference to the drawings and in particular to Figures 1, 3 and 4, an apparatus 1 according to the present invention comprises a leaktight, rigid casing, generally indicated 2. In the embodiment shown by way of example, the casing 2 comprises a parallelepipedal tank-like container 3 having at the top an opening 4 provided with a peripheral flange 5 with which a closure lid 6 is coupled in a leaktight manner, for example, by means of screws indicated 7 in Figures 1 and 3.

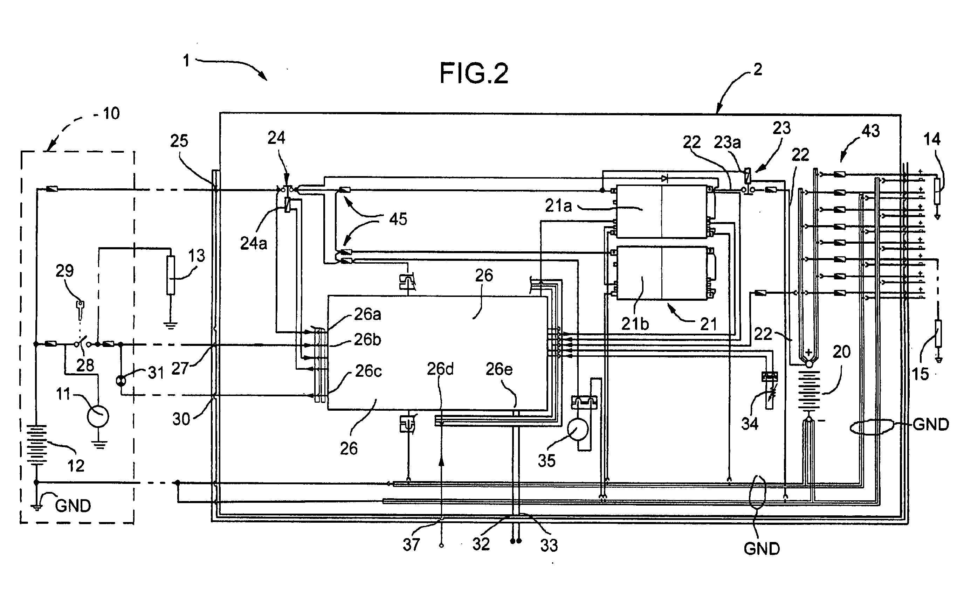

The leaktight container 2 houses various devices of the apparatus 1 which will be described further below. The specific description of the nature and arrangement of these devices will now be preceded by a short description of the circuit architecture of the apparatus 1, with reference to Figure 2.

Figure 2 shows schematically a system for the supply of electrical energy on board a motor vehicle. The system comprises an energy generating and storage apparatus, generally indicated 10, including a generator 11 (an alternator) which can be driven by the internal combustion engine (not shown) of the motor vehicle, and a main storage battery 12 connected to the generator. The battery 12 is intended to be connected operatively to "normal", that is, non-priority electrical/electronic user devices which are generally represented in Figure 1 by a generic load indicated 13. The normal, that is, non-priority devices or loads comprise substantially all of the electrical loads on board with the exclusion of the electrical/electronic devices which form part of by-wire steering or braking systems or of other by-wire systems the functionality of which is essential for the safe handling of the motor vehicle. Two of these priority devices or loads are shown, indicated 14 and 15 in the diagram of Figure 2.

The priority devices or loads are intended to be supplied operatively by means of the storage and supply apparatus 1 according to the invention. As can be seen from the diagram of Figure 2, this apparatus comprises an auxiliary storage battery 20 to be connected operatively to the priority loads.

The electrical-energy storage and supply apparatus 1 further comprises a controlled unidirectional DC/DC converter, generally indicated 21 in Figure 2. In the embodiment shown by way of example, the converter is constituted by two sections 21a and 21b which are in parallel with one another in order to be able to ensure that a desired high output power value can be reached.

The DC/DC converter 21 has its output connected to the positive terminal of the auxiliary battery 20 by means of a line 22 in which a normally open switch (a remote-control switch) indicated 23 in Figure 2 is interposed.

A further normally open switch (remote-control switch) 24 is interposed between the input of the DC/DC converter 21 (in particular the input of the section 21a of that converter) and an input terminal 25 of the apparatus 1 which is operatively connected to the positive terminals of the battery 12 and of the generator 11.

The switch 23 is controlled by a winding or solenoid 23a connected between the switch 24 and an earth conductor GND of the apparatus 1. The switch 24 is similarly controlled by a winding or solenoid 24a which in turn is driven by an electronic control unit 26 within the apparatus 1.

The unit 26 has an input 26a which is connected to the terminal 25 of the apparatus 1 and an input 26b which is connected to the input terminal 27 of the apparatus 1 which in turn can be connected to the positive terminal of the battery 12 of the generator 11 by means of a switch 28. The latter can be closed manually, for example, by means of the key 29 for operating the ignition and starting switch of the motor vehicle.

The unit 26 has a further terminal 26c which is connected to a terminal 30 of the apparatus 1. An indicator lamp 31 is connected between the terminal 30 of the apparatus 1 and the switch 28. The unit 26 is arranged to switch on the lamp 31 when it is necessary to indicate the occurrence of an operating anomaly or breakdown in the apparatus 1. The unit 26 has an input 26d which is connected to the terminal 37 of the apparatus 1 that is to be connected to an electronic control unit (not shown) of the vehicle in order to receive an operation enabling signal therefrom.

The unit 26 also has an output 26e which is connected to terminals 32 and 33 of the apparatus 1 for connection to a communication network installed in the motor vehicle, for example, a network operating in accordance with the LIN protocol. The control unit 26 can input to the network through the output 26e malfunction diagnosis signals or signals of breakdowns which have occurred in the apparatus 1.

A temperature sensor associated with the auxiliary battery 20 and connected to corresponding inputs of the control unit 26 is indicated 34 in Figure 2. The unit also has a plurality of terminals which are connected to the control inputs of the sections 21a and 21b of the DC/DC converter 21 as well as to the output of the converter.

An electric motor for operating an electric fan 41 mounted in the casing 2 of the apparatus 1 in order to bring about recirculation of the air contained therein is indicated 35 in Figure 2. The motor 35 is connected between the remote-control switch 24 and the earth GND.

The control unit 26 is arranged to drive the switches 23 and 24 in a manner such as to enable the DC/DC converter 21 to be connected to the generating apparatus 10 and to the auxiliary battery 20 of the apparatus 1 in predetermined operative conditions. This enablement is performed, for example, when the vehicle ignition and starting switch 28 is closed and in the presence of an enabling signal from the control system of the motor vehicle at the terminal 37 of the apparatus 1.

The switch 23 automatically disconnects the output of the DC/DC converter 21 from the battery 20 when the switch 23 opens, preventing the battery 20 from being discharged into the output capacitor/s of the converter 21.

During normal operation, the electronic control unit 26 is therefore arranged to estimate the charge state of the auxiliary battery 20 in accordance with predetermined procedures and to drive the DC/DC converter 21 in a manner such as to regulate the supply of electrical energy coming from the generating apparatus 10 (to the auxiliary battery 20) in a manner such that the estimated charge state of the battery 20 tends to be kept constantly at a predetermined reference value. For this purpose, the unit 26 modulates the power of the converter 21 in order to keep the charge state of the battery 20 at the desired value. This regulation or modulation may be continuous, that is, substantially proportional to the "error" between the reference value and the estimated charge state, or may be of the on/off type.

The unit 26 is also advantageously arranged to emit, at the output 26e, diagnosis signals, for example, for the control system of the vehicle, to indicate the occurrence of fault events such as a permanent breakdown of one of the components of the apparatus 1 with consequent loss of the recharging function of the auxiliary battery 20, or a condition in which it is impossible to reach the target charge-state value of the battery 20, for example, because of transitory high-intensity phenomena or because of a lack of adequate voltage/power levels from the generating apparatus 10.

With reference to Figure 2, inside the casing 2, the apparatus 1 comprises a plurality of over-current protection devices, in particular, fuses 43 and 45, connected between the remote-control switch 24, the converter 21, and the unit 26 as well as between the remote-control switch 23 and the auxiliary battery 20 and between the positive terminal of the battery and the outputs for connection to the priority loads 14-15.

With reference to Figures 1, 2 and 4, the location of the various devices and components of the apparatus 1 in the casing 2 is advantageously as follows.

The control unit 26 is carried by a card or board 40 fixed to the underside of the lid 6. The air-recirculation fan 41, the motor 35 of which has already been described above with reference to Figure 2, is fixed to the same side of the lid 6.

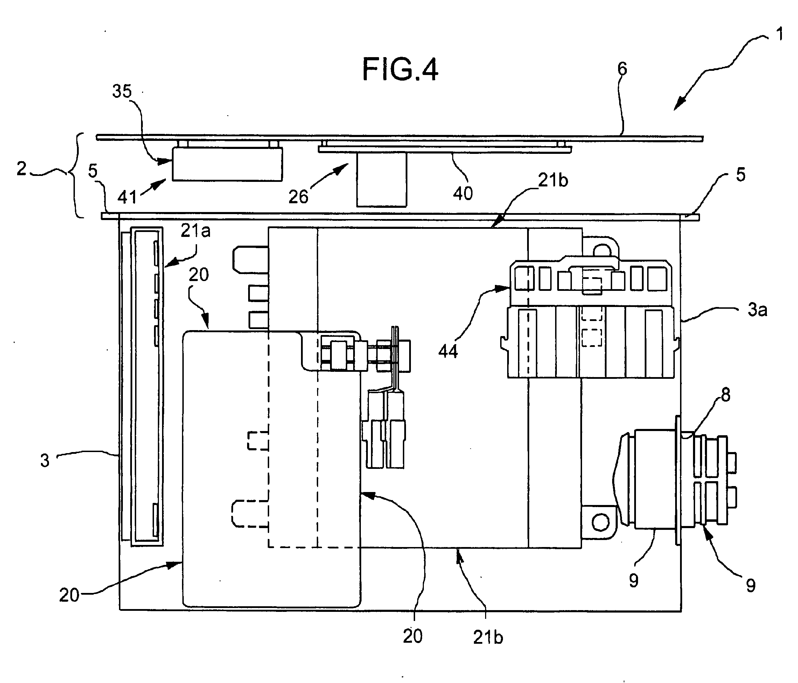

With reference to Figures 3 and 4, the two sections 21a and 21b of the DC/DC converter 21 are fixed to two adjacent vertical side walls of the container 3 and the auxiliary battery 20 is located between the two sections, in particular in the vicinity of the section 21a. As can be seen from Figure 3 in particular, the fan 41 extends in the region between the adjacent sides of the two sections 21a and 21b of the DC/DC converter 21 and the auxiliary battery 20.

The remote-control switch 24 is fixed to a support structure 42 (Figure 3) arranged in the vicinity of the larger vertical wall of the container 3 facing that to which the section 21b of the converter 21 is fixed and in the vicinity of the front vertical wall 3a in which the multipole connector 9 is mounted. Some fuses 43, that is, the fuses relating to the positive terminal of the battery 20 and to the output of the control unit 26 (see also Figure 2) are mounted in the support structure 42.

With reference to Figures 3 and 4, a further support structure 44 is also arranged in the container 3 of the apparatus 1 and houses further fuses, generally indicated 45, that is, the fuses relating to the remote switch 24 (Figures 2 and 3) .

The structure 44 is located in the upper portion of the tank-like container 3 in the vicinity of its front vertical wall 3a. In plan (Figure 3), the structure 44 is located between the multipole connector 9 and the section 21b of the DC/DC converter 21.

The above-described locations of the various components of the apparatus 1 inside the casing 2 permits an orderly arrangement of the bundles of insulated conductors which serve to interconnect the components. These conductors are not shown in Figures 3 and 4 in order not to clutter the graphic representation.

All of the electrical terminals of the above-described apparatus 1 are advantageously located in the multipole connector 9. The apparatus 1 as a whole can therefore be connected to the electrical-energy generating apparatus 10 and to other devices of the motor vehicle by a single wiring harness connected to the connector 9 and having branches or offtakes where necessary for local connection to individual devices.

An apparatus according to the invention is in fact an integrated energy storage and distribution system which can supply electrical energy to priority devices or loads reliably and safely. The apparatus provides a fault-tolerant electrical-energy distribution system for the priority loads, ensuring the supply of energy for a predetermined period of time defined at the design stage, even in the event of breakdown of the conventional generating and storage apparatus 10.

Particularly advantageous aspects of the apparatus according to the invention are the integration of the protection devices, the electrical and mechanical layout which permits a compact construction, the facility to locate the apparatus even in regions of the vehicle which are exposed to atmospheric agents, and the modularity of the apparatus itself.

Naturally, the principle of the invention remaining the same, the forms of embodiment and details of construction may be varied widely with respect to those described and illustrated purely by way of non-limiting example, without thereby departing from the scope of the invention as defined in the appended claims.

## Claims

1. Apparatus (1) for the storage and supply of electrical energy for the supply of predetermined priority electrical loads (14-15) in a system such as the electrical system of a motor vehicle in which there is an apparatus (10) for generating electrical energy with which at least one main storage battery (12) is associated,
the apparatus (1) comprising a rigid, leaktight casing (2; 3, 6) which has a single multipole electrical connector (9) and in which are housed:
an auxiliary storage battery (20) to be connected operatively to the priority loads (14-15) by means of the connector (9),
a controlled unidirectional DC/DC converter (21) to be connected to the auxiliary battery (20) and, via the connector (9), to the apparatus (10) for generating electrical energy to permit a flow of recharging energy towards the auxiliary battery (20),
electrical switch means (23; 24) suitable for controlling the connections between the DC/DC converter (21) and the auxiliary battery (20) and, via the connector (9), the generating apparatus (10), and
an electronic control unit (26) associated with the DC/DC converter (21) and arranged for:
- controlling the electrical switch means (23, 24) in a manner such as to enable the DC/DC converter (21) to be connected to the generating apparatus (10) and to the auxiliary battery (20) in predetermined operative conditions,
- then estimating the charge state of the auxiliary battery (20) in accordance with predetermined procedures, and
- driving the DC/DC converter in a manner such as to regulate the supply of electrical energy coming from the generating apparatus (10) to the auxiliary battery (20) in a manner such that the estimated charge state of the auxiliary battery (20) tends towards a predetermined reference value.

2. Apparatus according to Claim 1 in which the casing (2; 3, 6) also houses over-current protection devices (43, 45) connected between the connector (9) and the input of the DC/DC converter (21), between the output of the DC/DC converter (21) and the auxiliary battery (20), and between the auxiliary battery (20) and the terminals of the connector (9) which are to be connected to priority loads (14-15).

3. Apparatus according to Claim 1 or Claim 2 in which, for use in a motor vehicle, the control unit (26) has an input (26d) for receiving an enabling signal from a control system of the motor vehicle.

4. Apparatus according to any one of the preceding claims in which the control unit (26) is arranged to generate and emit malfunction diagnosis signals or signals of breakdowns of the apparatus (1) at an output (26e) of the control unit (26) which is connected to the connector (9).

5. Apparatus according to any one of the preceding claims in which the electrical switch means comprise:
a first switch (24) controlled by the unit (26) and disposed between a terminal (25) of the multipole connector (9) and the input of the DC/DC converter (21), and
a second switch (23) disposed between the output of the DC/DC converter (21) and the auxiliary battery (20),
the second switch (23) being able to disconnect the auxiliary battery (20) automatically from the output of the DC/DC converter (21) when the first switch (24) opens.

6. Apparatus according to any one of the preceding claims, further comprising a fan (41) which can bring about forced circulation of the air inside the casing (2; 3, 6).

7. Apparatus according to Claim 6 in which the casing (2) comprises a tank-like container (3) and an associated closure element or lid (6), and in which the electronic control unit (26) and the fan (41) are connected to the side of the closure element or lid (6) which faces the interior of the tank-like container (3).

## Patentansprüche

1. Vorrichtung (1) zum Speichern und Abgeben von elektrischer Energie für die Anspeisung von vorgegebenen bevorrechtigten elektrischen Lasten (14-15) in einem System, beispielsweise im elektrischen System eines Kraftfahrzeugs, in dem sich eine Einrichtung (10) zum Erzeugen von elektrischer Energie befindet, der zumindest eine Haupt-Akkumulatorenbatterie (12) zugeordnet ist,
wobei die Vorrichtung (1) ein starres, dichtes Gehäuse (2; 3, 6) enthält, das eine einzige mehrpolige elektrische Steckverbindung (9) besitzt, wobei im Gehäuse untergebracht sind;
eine Zusatz-Akkumulatorenbatterie (20), die über die Steckverbindung (9) betriebsmäßig mit den bevorrechtigten Lasten (14-15) verbunden werden kann,
ein gesteuerter, in eine Richtung arbeitender Gleichspannungswandler (21), der mit der Zusatzbatterie (20) und über die Steckverbindung (9) mit der Einrichtung (10) zum Erzeugen von elektrischer Energie verbunden werden kann, um Energie für die Wiederaufladung zur Zusatzbatterie (20) fließen zu lassen,
eine elektrische Umschalteinrichtung (23; 24), die dazu dient, um die Verbindungen zwischen dem Gleichspannungswandler (21) und der Zusatzbatterie (20) und über die Steckverbindung (9) mit der Generatoreinrichtung (10) zu steuern, und
eine elektronische Steuereinheit (26), die dem Gleichspannungswandler (21) zugeordnet ist und die so aufgebaut ist, dass sie
- die elektrische Umschalteinrichtung (23, 24) so steuert, dass der Gleichspannungswandler (21) in vorgegebenen Betriebszuständen mit der Generatoreinrichtung (10) und mit der Zusatzbatterie (20) verbunden werden kann,
- dann den Ladezustand der Zusatzbatterie (20) in Übereinstimmung mit vorgegebenen Verfahren beurteilt, und
- den Gleichspannungswandler so ansteuert, dass die Abgabe von elektrischer Energie, die von der Generatoreinrichtung (10) zur Zusatzbatterie (20) kommt, so steuert, dass sich der beurteilte Ladezustand der Zusatzbatterie (20) zu einem vorgegebenen Bezugswert bewegt.

2. Vorrichtung gemäß Anspruch 1, wobei im Gehäuse (2; 3, 6) weiters Überstrom-Schutzeinrichtungen (43, 45) untergebracht sind, die zwischen der Steckverbindung (9) und dem Eingang des Gleichspannungswandlers (21), zwischen dem Ausgang des Gleichspannungswandlers (21) und der Zusatzbatterie (20) sowie zwischen der Zusatzbatterie (20) und den Anschlüssen der Steckverbindung (9) liegen, die mit den bevorrechtigten Lasten (14-15) verbunden werden sollen.

3. Vorrichtung gemäß Anspruch 1 oder Anspruch 2, wobei die Steuereinheit (26) für eine Verwendung in einem Kraftfahrzeug einen Eingang (26d) besitzt, der ein Betriebssignal von einem Steuersystem des Kraftfahrzeugs erhält.

4. Vorrichtung gemäß irgendeinem der bisherigen Ansprüche, wobei die Steuereinheit (26) so aufgebaut ist, dass sie Diagnosesignale über Funktionsstörungen oder Signale über Störungen der Vorrichtung (1) erzeugt und an einem Ausgang (26e) der Steuereinheit (26) abgibt, der mit der Steckverbindung (9) verbunden ist.

5. Vorrichtung gemäß irgendeinem der bisherigen Ansprüche, wobei die elektrische Umschalteinrichtung enthält:
einen ersten Schalter (24), der von der Einheit (26) gesteuert wird und zwischen einem Anschluss (25) der mehrpoligen Steckverbindung (9) und dem Eingang des Gleichspannungswandlers (21) angeordnet ist, und
einen zweiten Schalter (23), der zwischen dem Ausgang des Gleichspannungswandlers (21) und der Zusatzbatterie (20) angeordnet ist,
wobei der zweite Schalter (23) die Zusatzbatterie (20) automatisch vom Ausgang des Gleichspannungswandlers (21) trennen kann, wenn der erste Schalter (24) öffnet.

6. Vorrichtung gemäß irgendeinem der bisherigen Ansprüche, wobei die Vorrichtung weiters ein Gebläse (41) enthält, das eine zwangsweise Zirkulation der Luft innerhalb des Gehäuses (2; 3, 6) erzeugen kann.

7. Vorrichtung gemäß Anspruch 6, wobei das Gehäuse (2) einen wannenartigen Behälter (3) sowie ein zugeordnetes Verschlusselement oder Deckel (6) enthält, und wobei die elektronische Steuereinheit (26) und das Gebläse (41) mit jener Seite des Verschlusselements oder Deckels (6) verbunden sind, die zum Inneren des wannenartigen Behälters (3) gerichtet ist.

## Revendications

1. Dispositif (1) pour le stockage et la délivrance d'énergie électrique pour la délivrance de charges électriques de haute priorité prédéterminées (14-15) dans un système, tel que le système électrique d'un véhicule à moteur, dans lequel se trouve un dispositif (10) pour générer de l'énergie électrique à laquelle au moins une batterie de stockage principale (12) est associée,
le dispositif (1) comprenant un boîtier rigide étanche aux fuites (2 ; 3, 6) qui possède un unique connecteur électrique multipolaire (9) et dans lequel sont logés :
une batterie de stockage auxiliaire (20) reliée en fonctionnement aux charges de haute priorité (14-15) au moyen du connecteur (9),
un convertisseur CC/CC unidirectionnel contrôlé (21) relié à la batterie auxiliaire (20) et, par l'intermédiaire du connecteur (9), au dispositif (10) pour générer une énergie électrique afin de permettre un flux de recharge d'énergie vers la batterie auxiliaire (20),
un commutateur électrique (23, 24) approprié pour contrôler les connexions entre le convertisseur CC/CC (21) et la batterie auxiliaire (20) et, par l'intermédiaire du connecteur (9), le dispositif de génération (10), et
une unité de contrôle électronique (26) associée au convertisseur CC/CC (21) et agencée pour :
- contrôler le commutateur électrique (23, 24) de manière à permettre au convertisseur CC/CC (21) d'être relié au dispositif de génération (10) et à la batterie auxiliaire (20) dans les conditions de fonctionnement prédéterminées,
- estimer ensuite l'état de charge de la batterie auxiliaire (20) selon les procédures prédéterminées, et
- exciter le convertisseur CC/CC de manière à réguler la délivrance d'énergie électrique provenant du dispositif de génération (10) à la batterie auxiliaire (20) de manière que l'état de charge estimé de la batterie auxiliaire (20) tende vers une valeur de référence prédéterminée.

2. Dispositif selon la revendication 1, dans lequel le boîtier (2 ; 3, 6) loge également des dispositifs de protection de surcharge (43, 45) reliés entre le connecteur (9) et l'entrée du convertisseur CC/CC (21), entre la sortie du convertisseur CC/CC (21) et la batterie auxiliaire (20), et entre la batterie auxiliaire (20) et les bornes du connecteur (9) qui doivent être reliées aux charges de haute priorité (14-15).

3. Dispositif selon la revendication 1 ou la revendication 2, dans lequel, pour une utilisation dans un véhicule à moteur, l'unité de contrôle (26) possède une entrée (26d) pour recevoir un signal autorisé depuis un système de contrôle du véhicule à moteur.

4. Dispositif selon l'une quelconque des revendications précédentes, dans lequel l'unité de contrôle (26) est disposée pour générer et émettre des signaux de diagnostic de mauvais fonctionnement ou des signaux de panne du dispositif (1) à une sortie (26e) de l'unité de contrôle (26) qui est reliée au connecteur (9).

5. Dispositif selon l'une quelconque des revendications précédentes, dans lequel le commutateur électrique comprend :
un premier commutateur (24) contrôlé par l'unité (26) et disposé entre une borne (25) du connecteur multipolaire (9) et l'entrée du convertisseur CC/CC (21), et
un second commutateur (23) disposé entre la sortie du convertisseur CC/CC (21) et la batterie auxiliaire (20),
le second commutateur (23) pouvant déconnecter la batterie auxiliaire (20) automatiquement de la sortie du convertisseur CC/CC (21) lorsque le premier commutateur (24) est ouvert.

6. Dispositif selon l'une quelconque des revendications précédentes, comportant en outre un ventilateur (41) qui peut amener une circulation forcée de l'air à l'intérieur du boîtier (2 ; 3, 6).

7. Dispositif selon la revendication 6, dans lequel le boîtier (2) comprend un conteneur semblable à un réservoir (3) et un élément de fermeture ou un couvercle associé (6), et dans lequel l'unité de contrôle électronique (26) et le ventilateur (41) sont connectés au côté de l'élément de fermeture ou couvercle (6) qui se trouve en vis-à-vis de l'intérieur du conteneur semblable à un réservoir (3).
